# EUROPEAN PATENT APPLICATION

(11) **EP 2 098 979 A1**
(43) Date of publication of application: **09.09.2009**
(21) Application number: 08152475.3
(22) Date of filing: 07.03.2008
(51) Int. Cl.: G06K 19/07, G01S 13/00

(54) **Transponder system.**

(71) Applicant: Nederlandse Organisatie voor toegepast-natuurwetenschappelijk onderzoek TNO, 2628 VK Delft (NL)
(72) Inventor: Fletterman, Aeneas, 2628 VK Delft (NL); Theeuwes, Johannes Adrianus Cornelis, 5612 NE Eindhoven (NL); Doodeman, Gerardus Johannes Nicolaas, 5501 DM Veldhoven (NL); Schildhuizen, Stephanus Franciscus, 5056 MG Berkel-Enschot (NL)
(74) Representative: Hatzmann, Martin

(57) **Abstract**

Transponder system comprising RF transceiver means (1,2) arranged to transmit an interrogation signal and to receive backscattered reflections. A transponder (3) comprises means for receiving the interrogation signal and for converting it into a reflection signal which comprises higher harmonic frequencies e.g. by using an antenna circuitry including a dipole antenna interconnected via a circuit comprising a non-linear element like e.g. a diode and having a complex impedance, enabling the reflection of said higher harmonics. The RF transceiver means preferably are arranged to transmit a frequency or phase modulated signal. appropriate processing means are arranged for assessing the distance and direction of the transponder, e.g. by using at least two receivers (1,2) each of them being arranged to receive said reflection signal and connected to means for assessing the distance to the transponder. The transceiver means are connected to means (5) for computing, from the assessed distances between the receivers and the transponder, the location of the transponder.

## Description

The invention refers to a transponder system, comprising an RF transceiver means which is arranged to transmit an RF signal and to receive backscattered reflections caused by said transmitted RF signal.

In particular the invention refers to localization of persons of objects.

RF tags (hereinafter called transponders) come in three general varieties: passive, active, or semi-passive (also known as battery-assisted). Passive transponders require no internal power source, thus being pure passive devices (they are only active when a reader is nearby to power them), whereas semi-passive and active transponders require a power source, usually a small battery. To communicate, transponders respond to queries generating signals that must not create interference with the readers, as arriving signals can be very weak and must be told apart. Besides backscattering, load modulation techniques can be used to manipulate the reader's field. Typically, backscatter is used in the far field, whereas load modulation applies in the near field, within about a wavelength from the reader.

Passive transponders have no internal power supply. The electrical current induced in the antenna by the incoming radio frequency signal provides just enough power for the CMOS integrated circuit in the transponder to power up and transmit a response. Most passive transponders signal by backscattering the carrier wave from the reader. This means that the antenna has to be designed both to collect power from the incoming signal and also to transmit the outbound backscatter signal. The response of a passive transponder is not necessarily just an ID number; the transponder chip can contain non-volatile, possibly writable EEPROM for storing data. Passive transponders have practical read distances ranging from about 10 cm up to a few meters.

Active transponders have their own internal power source, which is used to power the integrated circuits and to broadcast the signal to the reader. Many active transponders today have practical ranges of hundreds of meters, and a battery life of up to 10 years.

Semi-passive transponders are similar to active transponders in that they have their own power source, but the battery only powers the microchip and does not broadcast a signal. The RF energy is reflected back to the reader like a passive transponder. An alternative use for the battery is to store energy from the reader to emit a response in the future, usually by means of backscattering. The battery-assisted receive circuitry of semi-passive transponders lead to greater sensitivity than passive transponders, typically 100 times more. The enhanced sensitivity can be leveraged as increased range (by a factor 10) and/or as enhanced read reliability (by one standard deviation).

In HF transponders a planar spiral with 5-7 turns over a credit-card-sized form factor can be used to provide ranges of tens of centimeters. Ultra-high frequency (UHF) and microwave passive transponders are usually radiatively-coupled to the reader antenna and can employ conventional dipole-like antennas. Only one metal layer is required, reducing cost of manufacturing. Dipole antennas, however, are a poor match to the high and slightly capacitive input impedance of a typical integrated circuit. Folded dipoles, or short loops acting as inductive matching structures, are often employed to improve power delivery to the IC. Half-wave dipoles (16 cm at 900 MHz) are too big for many applications; for example, transponders embedded in labels must be less than 100 mm (4 inches) in extent. To reduce the length of the antenna, antennas can be bent or meandered, and capacitive tip-loading or bowtie-like broadband structures are also used. Compact antennas usually have gain less than that of a dipole — that is, less than 2 dBi — and can be regarded as isotropic in the plane perpendicular to their axis. Dipoles couple to radiation polarized along their axes, so the visibility of a transponder with a simple dipole-like antenna is orientation-dependent. Transponders with two orthogonal or nearly-orthogonal antennas, often known as dual-dipole transponders, are much less dependent on orientation and polarization of the reader antenna, but are larger and more expensive than single-dipole transponders. Patch antennas are used to provide service in close proximity to metal surfaces, but a structure with good bandwidth is 3-6 mm thick, and the need to provide a ground layer and ground connection increases cost relative to simpler single-layer structures.

One aim of the present invention is to provide a system in which the location of a passive or semi-passive can be traced in a wider range than in prior-art systems. Another aim of the invention is to provide more localization accuracy.

The system according to the invention is based on generating and detecting higher harmonics in the transponder. When a transponder is outside its normal range (the range in which a base station is able to read the ID modulated backscattered reflection signal), the transponder can be arranged to produce e.g. third harmonics which (in not-modulated form) can be received by the base station or by auxiliary receivers. When e.g. frequency or phase modulated signals (sometimes called "chirping") are used the base station or each auxiliary receiver will be able to assess the distance to the transponder (this mechanism is generally known in the art (e.g. see http://www.gologle.com-/search?hl=en&g=%22frequency+modulation%22+%22IKDk+tag%22+%22distance+measurement%22) When applying at least two receivers (one of them may be the base station's receiver) the location of the transponder may be computed from its distances to those receivers.

According to the present invention -- in a transponder system comprising RF transceiver means arranged for transmitting an RF signal having a frequency f and for receiving backscattered reflections caused by the transmitted RF signal -- it is preferred that the transponder comprises means for converting the received RF signal into a reflection signal which comprises one or more higher harmonic frequencies of f (having a frequency (n * f) wherein n is a natural number > 1) and to backscatter that reflection signal.

When a transponder comes outside the range in which its base station is able to read its ID modulated backscattered reflection signal, it becomes difficult to determine which backscattered signals are caused by reflection from the transponder and which may be caused by reflection from other, accidental objects which may be present. The use of a transponder according to the invention, which backscatters e.g. the third harmonics of the fundamental frequency f of the received signal, provides that those harmonics can be selectively discriminated from noise signals having the fundamental frequency, backscattered by any accidental objects.

The antenna circuitry may include two antenna elements, forming together a dipole, being interconnected via a circuit comprising a non-linear element like e.g. a diode and having a complex impedance, enabling the reflection of said higher harmonics. The non-linear component, e.g. diode, is able to convert the (interrogation) signal received from the base station in a DC for powering the connected ID modulation chip. Normally the circuit is brought into resonance with the fundamental frequency f by means of an inductance in the antenna circuit, thus suppressing any (undesired) higher harmonics caused by the diode. According to the present invention, however, such higher harmonics are intentionally not suppressed, but included in the reflection signal. For that reason, said inductance in the antenna circuitry is intentionally omitted, causing that the impedance of the antenna circuit is complex (e.g. due to a smoothing capacitor in the chip circuit) and in particular the third harmonic signal (3*f) will substantially be present in the backscattered reflection signal.

It is preferred that the transponder system comprises means which are arranged for assessing both the distance and the direction of the transponder w.r.t. the location of the RF transceiver means.

Preferably, the RF transceiver means are arranged to transmit a frequency or phase modulated signal, and the transponder system including appropriate processing means arranged for assessing the distance and direction of the transponder w.r.t. the location of the RF transceiver means. When such "chirping", FM modulated signals are used the base station or each auxiliary receiver will be able to assess the distance to the transponder. When applying at least two receivers (one of them may be the base station's receiver) the location of the transponder may be computed from the distances to those receivers.

The RF transceiver means preferably comprise at least two receivers each of them being arranged to receive said reflection signal and being connected to means for assessing the distance to the transponder. The RF transceiver means, moreover, may be connected to means for computing, from the assessed distances between said at least two receivers and the transponder, the location of the transponder.

In the system according to the invention it may be preferred that the RF transceiver means comprises at least one receiver which is arranged -- as an ID reading base station -- to receive and decode digital codes included in the reflection signal.
Fig. 1a and 1b show an exemplary embodiment of the system according to the invention.
Fig. 2 shows the circuitry of a conventional transponder and the circuitry of a transponder which may be used in the exemplary embodiment.

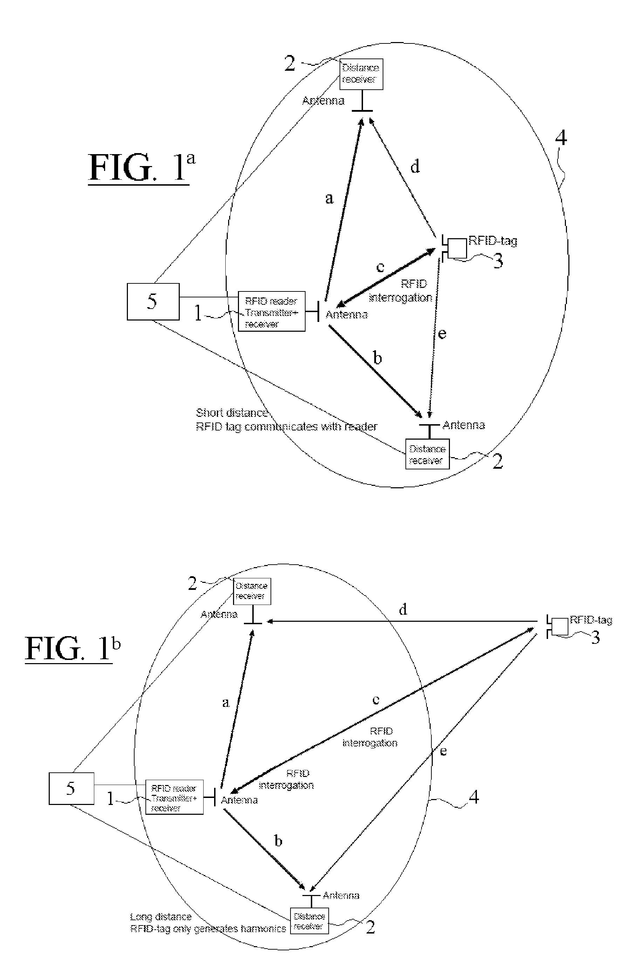

Figures 1a and 1b show an exemplary transponder system RF transceiver means, which are formed here by one transceiver (base station) 1 and two auxiliary receivers (distance receivers) 2. The transceiver 1 is arranged to transmit an RF signal D (hereinafter also called interrogation signal) having a frequency f (wavelength λ), as well as to receive backscattered reflections originated by that transmitted RF signal (having frequency f), and/or its e.g. third harmonic (having frequency 3*f). The transponder system, moreover, comprises a transponder (or tag) 3 which comprises means (antenna, chip) for receiving the RF signal transmitted by the transceiver 1 and for converting it into a reflection signal which comprises one or more higher harmonic frequencies (the third harmonic in this example) and to backscatter that reflection signal. Besides, the transponder may be arranged to modulate the reflection signal, employing AM, FM, PSK, QAM or any other suitable modulation scheme, with e.g. the transponder's ID code and/or other data, while at least one receiver, e.g. transceiver 1, is arranged to receive and to decode that data or ID code included in the backscattered reflection signal.

In order to convert - at the transponder's end - the interrogation signal D into a reflection signal which substantially consists of or comprises one or more higher harmonic frequencies (e.g. the third harmonic in this example) to be backscattered, the antenna circuitry may include two antenna elements, interconnected via a circuit comprising a non-linear element like e.g. a diode and having a complex impedance.

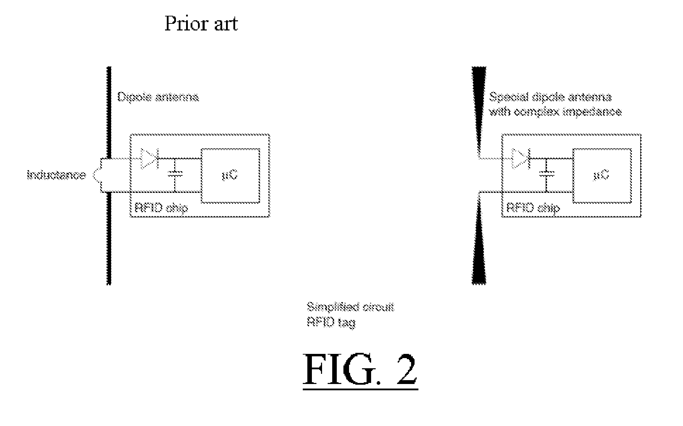

Figure 2 shows at the left side the circuitry of a conventional transponder and at the right side the circuitry of a transponder which may be used in the exemplary embodiment. The difference is a resonance induction element, interconnecting the dipoles, which is intentionally omitted in the transponder shown at the right side. Due to the complex impedance of the circuitry between the antenna and the (modulator) chip caused by the capacitor, harmonics which are caused, as a side-effect, by the diode (rectifying, the received interrogation signal from the transceiver 1 for powering the chip) are included in the backscattered reflection signal.

As the harmonics will only be included within the reflection signal which is backscattered by the transponder (viz. due to its diode en complex impedance antenna circuitry), but not within reflection signals backscattered from any other object in the vicinity of the transceiver 1, the transceiver 1 and/or receivers 2 will be able to detect the transponder more accurate, by discriminating between reflections with and reflections without higher harmonics. This applies for modulated (viz. by the modulation chip) reflection signals, which can be read-out by the base station 1, as long as the transponder 3 is within an ID detection area defined by a certain maximum ID detection border 4 (figures 1a and 1b). But it applies for not modulated signals, e.g. occurring from the same transponder 3 but located outside the ID detection border 4 as well. The ID codes, it is true, cannot be received by the base station (due to the fact that the DC voltage for powering the modulation chip is too low), but any reflections from the transponder 3 can be detected for a wider area, outside the ID detection border, in particular as the transponder 3 reflects (different from any other reflective objects in the environment) a reflection signal which includes e.g. the third harmonic frequency 3*f, which can be discriminated in a wide area outside the ID detection border 4. In particular when combined with measures for assessing the transponder's location, opens an attractive opportunity to follow (trace) the transponder 3 even in a wide area outside border 4.

In order to be able to assess both the distance and the direction of the transponder (in other words, its location) the transceiver 1 is arranged to transmit a ("chirping") FMCW signal. Moreover, the system includes appropriate processing means 5 which are arranged for assessing the distance and direction of the transponder w.r.t. the location of the RF transceiver means.

In figures 1a and 1b the RF transceiver means comprise the base station 1 and two auxiliary receivers 2. The base station transceiver 1 broadcasts an interrogating FMCW signal which is received by both auxiliary receivers 2 via paths a and b, and by the transponder 3 via path c. The interrogating signal is reflected by the transponder 3 to the transceiver via path c, and to the auxiliary receivers 2 via paths d and e. By using FMCW the delay times of all paths a - e can be measured. As the position of the base station 1 and the auxiliary receivers 2 is known beforehand, the position of the transponder 3 (having an variable position) can be computed by the processor 5. This applies for the situation in figure 1a (transponder within the ID detection area), as well as for the situation in figure 1b (transponder outside the ID detection area). In this way the position of the transponder can be followed (traced) both within the area in which it's ID can be read by the base station 1, and outside that area. In the latter situation, although the identity information of the transponder will be lost when it crosses the border 4, in spite of that the transponder's probable position can be traced even in a (large) area outside the ID detection area. In particular in that latter situation, the fact that the transponder's reflection signal comprises a substantial amount of intentionally generated (e.g. third) harmonics (due to the transponder's diode in combination with the complex impedance of its antenna/chip circuitry), which, although the signals may be rather weak due to the increasing distance) successfully can be discriminated, by the base station's receiver and the auxiliary receivers (viz. by tuning their antenna/circuitry to the e.g. third harmonic frequency), from "noise reflections" caused by accidental objects which, after all, only reflect the fundamental frequency of the interrogating signal.

Finally, it is noted that, in the configuration of figures 1a and 1b, use could made of only one auxiliary receiver 2, instead of two (the transceiver means comprise two receivers then instead of three, viz. the base station's 1 receiver and only one auxiliary receiver 2). In that case the calculations of the transponder's position may give two solutions, which - in certain circumstances - may suffice.

## Claims

1. Transponder system comprising RF transceiver means (1,2) which are arranged to transmit an RF signal having a frequency f and to receive backscattered reflections caused by said transmitted RF signal;
the transponder system, moreover, comprising a transponder (3) which comprises means for receiving the RF signal transmitted by the RF transceiver means and for converting it into a reflection signal which comprises one or more higher harmonic frequencies of f and to backscatter that reflection signal.

2. Transponder system according to claim 1, the transponder's antenna circuitry including two antenna elements, forming together a dipole, being interconnected via a circuit comprising a non-linear element like e.g. a diode and having a complex impedance, enabling the reflection of said higher harmonics.

3. Transponder system according to claim 1, comprising means arranged for assessing both the distance and the direction of the transponder w.r.t. the location of the RF transceiver means.

4. Transponder system according to claim 3, the RF transceiver means being arranged to transmit a frequency or phase modulated signal, and the transponder system including appropriate processing means arranged for assessing the distance and direction of the transponder w.r.t. the location of the RF transceiver means.

5. Transponder system according to claim 3 or 4, the RF transceiver means comprising at least two receivers (1,2) each of them being arranged to receive said reflection signal and being connected to means for assessing the distance to the transponder;
the RF transceiver means, moreover, being connected to means (5) for computing, from the assessed distances between said at least two receivers and the transponder, the location of the transponder.

6. Transponder system according to claim 5, the RF transceiver means comprising at least one receiver which is arranged to receive and decode digital codes included in the reflection signal.

7. Transponder (3) comprising means for receiving a RF signal transmitted by RF transceiver means and for converting it into a reflection signal which comprises one or more higher harmonic frequencies of f and to backscatter that reflection signal.

8. Transponder according to claim 7, comprising antenna circuitry including two antenna elements, forming together a dipole, being interconnected via a circuit comprising a non-linear element like e.g. a diode and having a complex impedance, enabling the reflection of said higher harmonics.
